# EUROPEAN PATENT APPLICATION

(11) **EP 3 451 048 A1**
(43) Date of publication of application: **06.03.2019**
(21) Application number: 18187309.2
(22) Date of filing: 03.08.2018
(51) Int. Cl.: G02C 5/12

(54) **NOSE PAD FOR A FRAME FOR EYEGLASSES**

(30) Priority: 31.08.2017 IT 201700097846
(71) Applicant: Silcon Plastic S.r.l., 32012 Forno di Zoldo (BL) (IT)
(72) Inventor: COSTANTIN, Arcangelo, 32012 Val di Zoldo BL (IT); BATTISTIN, Pietro, 32012 Val di Zoldo, Frazione Dont BL (IT)
(74) Representative: Modiano, Micaela Nadia

(57) **Abstract**

A nose pad for a frame for eyeglasses, which comprises a soft wing (11) for resting on the nose and a substantially undeformable insert (12) that protrudes from the rear of the wing (11) with a shank (13) to be inserted into the opening of an eyelet-shaped hook (14) of the frame. The eyelet-shaped hook (14) is of the type constituted by two arms (15) that are adapted to be arranged around said shank (13) in a corresponding narrower region of its cross-section.

## Description

The present invention relates to a nose pad for a frame for eyeglasses.

In the eyewear sector, the use is widespread of pads to be applied to a frame for eyeglasses, which are adapted to make resting the eyeglass frame on the user's nose comfortable.

Nowadays pads for eyeglasses are widespread and are constituted by a wing made of soft plastic material, typically PVC, rubber or silicone, with a shank, at the end opposite to the end for resting on the nose, that protrudes from the wing in order to be inserted with interference into a metallic hook, that is substantially eyelet-shaped.

The fact that the pad is made of a soft material makes it easily deformable, so facilitating the insertion of the shank into the eyelet of the metallic hook.

The shank is provided with a groove that acts as a seat for the metallic hook and, in order to contain the bulk, the portion that protrudes from the hook and which prevents the extraction of the pad has a relatively contained thickness, typically less than about 0.5 mm.

Owing to these characteristics, the stability of the pad is poor and it is easy for the user to accidentally remove it.

In order to limit this drawback, the width of the shank is maximized, thus making it relatively wide and thin.

This, however, makes it difficult and laborious to insert the pad into the hook of the frame during assembly of the eyeglass frame, because it requires a deformation of all the soft material of the shank in order to force its passage into the opening of the hook, which by contrast is rigid and thin.

A solution that is usually adopted to facilitate assembly is to have an opening cut on the hook, thus making it into two elastically deformable arms during the insertion of the shank.

Such pads are not capable of completely overcoming the above mentioned drawbacks and furthermore, from the aesthetic point of view, they are difficult to customize with logos, wordings, images etc.

The aim of the present invention is to provide a nose pad for a frame for eyeglasses that is capable of improving the prior art in one or more of the above mentioned aspects.

Within this aim, an object of the invention is to provide a pad that can easily be installed on the frame during insertion of the shank into the opening of the hook and which at the same time is difficult to remove therefrom.

Another object of the invention is to provide a pad that is customizable, for example with logos or wordings of the maker.

Furthermore, another object of the present invention is to overcome the drawbacks of the prior art in an alternative manner to any existing solutions.

Another object of the invention is to provide a pad that is highly reliable, easy to implement at low cost.

This aim and these and other objects which will become better apparent hereinafter are achieved by a nose pad for frames for eyeglasses according to claim 1, optionally provided with one or more of the characteristics of the dependent claims.

Further characteristics and advantages of the invention will become better apparent from the description of a preferred, but not exclusive, embodiment of the pad according to the invention, which is illustrated by way of non-limiting example in the accompanying drawings wherein:
- Figure 1 shows the pad according to the invention before its association with a hook of a frame for eyeglasses;
- Figure 2 is a view from above, with respect to the position of use of a frame, of the pad according to the invention associated with a hook of the frame;
- Figure 3 is a cross-sectional side view, with respect to the position of use of a frame for eyeglasses, of the pad according to the invention during association with a hook of the frame;

- Figure 4 is a cross-sectional side view, with respect to the position of use of a frame for eyeglasses, of the pad according to the invention associated with a hook of the frame;
- Figure 5 is a plan view of the pad according to the invention associated with a hook of the frame.

With reference to the above figures, the pad according to the invention, generally designated by the reference numeral 10, is designed for a frame for eyeglasses.

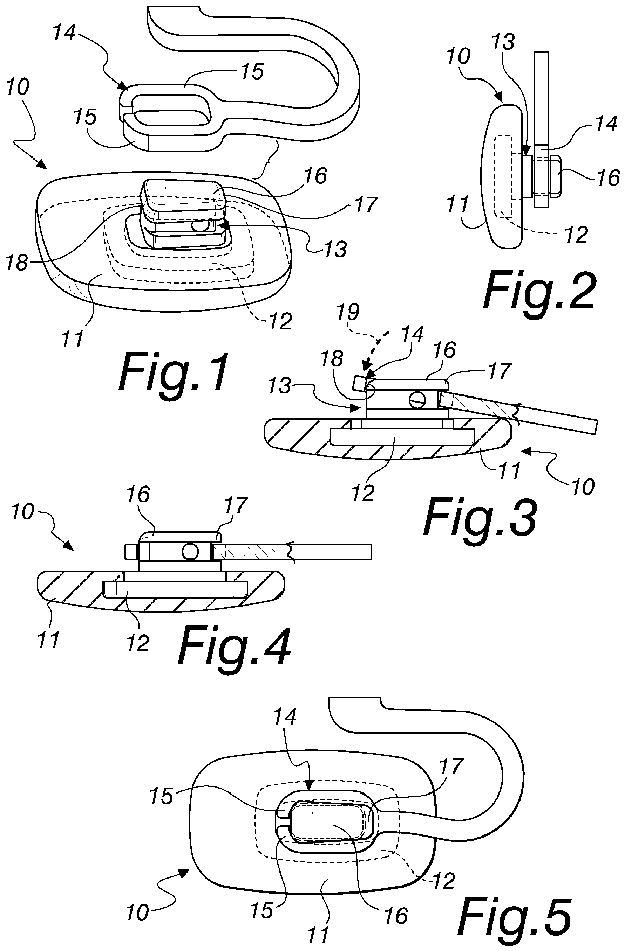

The pad 10 comprises a soft wing 11 for resting on the nose and a substantially undeformable insert 12 that protrudes from the rear of the wing 11 with a shank 13 to be inserted into the opening of an eyelet-shaped hook 14 of the frame. The eyelet-shaped hook 14, as can be seen in Figure 1, is of the of the type constituted by two arms 15 that are adapted to be arranged around the shank 13 in a corresponding narrower region of its cross-section.

Such narrower region of the cross-section, which is substantially rectangular, creates a groove on three sides of the shank 13, in which the hook 14 comes to rest.

The insert 12 is preferably made of substantially undeformable plastic material and can be, for example, transparent or galvanized.

Alternatively, the insert 12 can be made of metallic material or other rigid materials.

The wing 11, which is soft, is provided by overmolding plastic material on the insert 12, preferably a material selected from PVC, rubber and silicone.

The shank 13 is adapted to pass through the opening of the eyelet-shaped hook 14 with an insertion portion 16 which is advantageously provided with an extraction-preventing protrusion 17 which is adapted to be arranged on the opposite side with respect to the side with the free ends of the arms 15.

The extraction-preventing protrusion 17 can be clearly seen in Figures 1, 3 and 4.

As shown in Figures 1 and 4, the insertion portion 16 has a substantially trapezoidal shape in plan view, with tapering in the direction of the extraction-preventing protrusion 17.

Furthermore, this insertion portion 16 also has a bevel 18 in the region that lies opposite from the extraction-preventing protrusion 17.

Use of the pad, according to the invention, is the following.

During assembly of the eyeglass frame, the shank 13 is inserted into the eyelet-shaped hook 14 by making the insertion portion 16 pass through the opening in the latter. In particular, the insertion occurs starting from the extraction-preventing protrusion 17, as shown in Figure 3, in the part of the hook 14 opposite to the free ends of the arms 15. The trapezoidal, substantially conical, shape of the insertion portion 16 facilitates the insertion of the shank 13, with the narrower region in the part of the extraction-preventing protrusion 17. Subsequently, as indicated by the arrow 19 in the same figure, the insertion is completed by pushing the hook 14 against the shank 13 (or vice versa) in the region arranged opposite the region of the extraction-preventing protrusion 17, i.e. where the bevel 18 is expressly present, which facilitates this final step of the insertion, by favoring the widening of the eyelet with an elastic splaying of the arms 15 of the hook 14, which return to the original position at the end of the insertion, arranging themselves about the shank 13 in the corresponding narrower region.

The hook 14 opens easily because the material of the shank 13 by which it is deformed is also rigid and therefore is not subjected to deformations by passing through the eyelet of the hook.

The trapezoidal shape in plan view of the insertion portion 16, in addition to facilitating the first insertion step, prevents the accidental removal of the shank.

Furthermore, the removal is obviously also prevented by means of the extraction-preventing protrusion 17, which creates an undercut that blocks the hook.

Also, it should be noted that the pad 10 according to the invention can be easily customized in the part of the shank 13 with colors, logos, wordings, etc. since this is part of an insert made of rigid plastic material or of metallic material.

In practice it has been found that the invention fully achieves the intended aim and objects by providing a pad that can be easily installed on the frame and which at the same time is difficult to separate, especially by accident.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102017000097846 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A nose pad for a frame for eyeglasses, which is **characterized in that** it comprises a soft wing (11) for resting on the nose and a substantially undeformable insert (12) that protrudes from the rear of said wing (11) with a shank (13) to be inserted into the opening of an eyelet-shaped hook (14) of the frame, said eyelet-shaped hook (14) being of the type constituted by two arms (15) that are adapted to be arranged around said shank (13) in a corresponding narrower region of its cross-section.

2. The pad according to claim 1, **characterized in that** said shank (13) is adapted to pass through the opening of said eyelet-shaped hook (14) with an insertion portion (16) which is provided with an extraction-preventing protrusion (17) which is adapted to be arranged on the opposite side with respect to the side with the free ends of said arms (15).

3. The pad according to one or more of the preceding claims, **characterized in that** said insertion portion (16) has a substantially trapezoidal shape in plan view, with tapering in the direction of said extraction-preventing protrusion (17).

4. The pad according to one or more of the preceding claims, **characterized in that** said insertion portion (16) is provided with a bevel (18) in the region that lies opposite to said extraction-preventing protrusion (17).

5. The pad according to one or more of the preceding claims, **characterized in that** said wing (11) is provided by overmolding plastic material on said insert (12).

6. The pad according to one or more of the preceding claims, **characterized in that** said insert (12) is made of substantially undeformable plastic material.

7. The pad according to one or more of the preceding claims, **characterized in that** said insert (12) is made of metallic material.
